# EUROPEAN PATENT APPLICATION

(11) **EP 4 671 969 A1**
(43) Date of publication of application: **31.12.2025**
(21) Application number: 23924255.5
(22) Date of filing: 25.12.2023
(51) Int. Cl.: G06F 8/65

(54) **INFORMATION PROCESSING SYSTEM, INFORMATION PROCESSING METHOD, AND STORAGE MEDIUM**

(30) Priority: 24.02.2023 JP 2023027075
(71) Applicant: TOYOTA JIDOSHA KABUSHIKI KAISHA, Toyota-shi Aichi 471-8571 (JP)
(72) Inventor: MIYAZAWA Tomoaki, Toyota-shi, Aichi 471-8571 (JP); NAKABAYASHI Ryota, Toyota-shi, Aichi 471-8571 (JP); YOMODA Naoki, Toyota-shi, Aichi 471-8571 (JP); MORI Atsushi, Toyota-shi, Aichi 471-8571 (JP); INOUE Hiroshi, Toyota-shi, Aichi 471-8571 (JP); KITAZAWA Tsukasa, Toyota-shi, Aichi 471-8571 (JP)
(74) Representative: J A Kemp LLP
(86) International application number: PCT/JP2023/046524
(87) International publication number: WO 2024/176611

(57) **Abstract**

Provided are an information processing system, an information processing method, and a storage medium. A processing circuit (12) carries out a schedule update assessment (S140). The schedule update assessment (S140) includes assessing, before a scheduled update start time, whether a software update can be started at the scheduled update start time. The scheduled update start time is the scheduled start time of a software update in a vehicle. In cases where the scheduled update assessment is negative (No in S140), the processing circuit (12) prompts a notification that updates have not been initiated to the user of the vehicle (S160). The notification that updates have not been initiated notifies the user that a software update has not been initiated at the scheduled update start time.

## Description

### TECHNICAL FIELD

The present disclosure relates to an information processing system, an information processing method, and a storage medium for processing information related to software update in a vehicle.

### BACKGROUND ART

Patent Literature 1 describes an information processing system that generates a schedule for updating vehicle software based on the usage situation of the vehicle.

### CITATION LIST

### Patent Literature

Patent Literature 1: Japanese Laid-Open Patent Publication No. 2012-14253

### SUMMARY OF INVENTION

### Technical Problem

A software update may not be performed as scheduled. In such a case, the user of the vehicle will notice afterward that the software update was not executed. This may reduce user convenience.

### Solution to Problem

One aspect of the present disclosure provides an information processing system including processing circuitry. The processing circuitry is configured to perform a scheduled update determination. The scheduled update determination includes determining before a scheduled update starting time whether a software update can be started at the scheduled update starting time. The scheduled update starting time is a scheduled starting time of the software update in a vehicle. The processing circuitry is configured to instruct issuance of an update starting failure notification to a user of the vehicle when the scheduled update determination is negative. The update starting failure notification indicates that the software update will not be started at the scheduled update starting time.

Another aspect of the present disclosure provides an information processing method. The information processing method includes performing a scheduled update determination with processing circuitry. The scheduled update determination includes determining before a scheduled update starting time whether a software update can be started at the scheduled update starting time. The scheduled update starting time is a scheduled starting time of the software update in a vehicle. The information processing method further includes instructing, with the processing circuitry, issuance of an update starting failure notification to a user of the vehicle when the scheduled update determination is negative. The update starting failure notification indicates that the software update will not be started at the scheduled update starting time.

A further aspect of the present disclosure provides a non-transitory computer-readable storage medium including a program stored to have a processor perform information processing. The information processing includes acquiring a scheduled update starting time that is a scheduled starting time for a software update in a vehicle. The information processing includes performing a scheduled update determination. The scheduled update determination includes determining before the scheduled update starting time whether the software update can be started at the scheduled update starting time. The information processing further includes instructing issuance of an update starting failure notification to a user of the vehicle when the scheduled update determination is negative. The update starting failure notification indicates that the software update will not be started at the scheduled update starting time.

With the configurations described above, the user will be able to know in advance that a software update will not be executed as scheduled. This improves user convenience.

### BRIEF DESCRIPTION OF DRAWINGS

Fig. 1 is a schematic diagram illustrating the configuration of an embodiment of an information processing system.
Fig. 2 is a flowchart of an update starting failure notification instruction process executed by the information processing system illustrated in Fig. 1.
Fig. 3 is a flowchart of an update starting failure notification instruction process executed by the information processing system illustrated in Fig. 1.

### DESCRIPTION OF EMBODIMENTS

In this specification, "at least one of A and B" should be understood to mean "only A, only B, or both A and B."

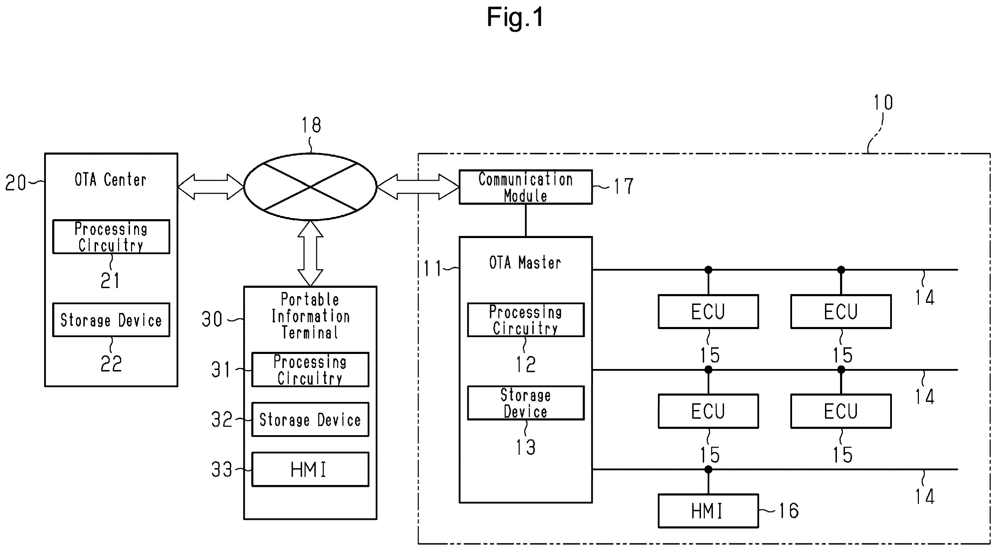

An embodiment of an information processing system, an information processing method, information processing, and an information processing program will hereafter be described in detail with reference to Figs. 1 to 3.

### Configuration of the Information Processing System

The configuration of an information processing system of the present embodiment will first be described with reference to Fig. 1. The information processing system of the present embodiment processes information related to software updates in a vehicle 10.

The vehicle 10 includes various types of electronic control units (ECU) 15, which control various parts of the vehicle 10, and an Over-the-Air (OTA) master 11, which is responsible for managing software update in the vehicle 10. The ECUs 15 include, for example, an engine ECU, a transmission ECU, a brake ECU, an advanced driver-assistance ECU, and a multimedia ECU. The OTA master 11 includes master processing circuitry 12 and a master storage device 13. Programs for managing software updates are stored in advance in the master storage device 13. The OTA master 11 is configured to have the master processing circuitry 12 read stored programs from the master storage device 13 to execute processes related to software update management. A communication module 17, for performing communication with an external device, is connected to the OTA master 11 through a mobile communication network 18. The vehicle 10 further includes a Human-Machine Interface (HMI) 16. The HMI 16 includes an input device, which is accessible by a vehicle occupant, and an output device, which provides the vehicle occupant with information in the form of an image or voice. The HMI 16 of the present embodiment has a navigation functionality for generating a route guide for the vehicle 10. The OTA master 11, the ECUs 15, and the HMI 16 are configured to perform communication with one another through on-board communication lines 14.

Software updates are performed in the vehicle 10 based on update data distributed from an OTA center 20 through the mobile communication network 18 and/or the like. The OTA center 20 is a server including center processing circuitry 21 and a center storage device 22. The OTA center 20 is configured to communicate with an external device through the mobile communication network 18.

The OTA center 20 is also configured to communicate with a portable information terminal 30, possessed by a user of the vehicle 10, through the mobile communication network 18 and/or the like. The portable information terminal 30 includes terminal processing circuitry 31, a terminal storage device 32, and a terminal HMI 33. The terminal processing circuitry 31 reads and executes programs stored in the terminal storage device 32. The programs stored in the terminal storage device 32 include a vehicle management program.

### Preparation Process for Software Update

A preparation process for a software update in the vehicle 10 will now be described. An example in which the software of one of the ECUs 15 in the vehicle 10 is updated will now be described. The subject of the software update may be the HMI 16, a sensor, or the like. That is, the subject of the software update may be an on-board device other than the ECU 15.

The software update is performed after the preparation process is completed. The software update preparation process includes a downloading phase and an installing phase.

In the downloading phase, software update data is downloaded from the OTA center 20 to the OTA master 11. In the downloading phase, the OTA master 11 receives the software update data from the OTA center 20. Then, the OTA master 11 stores the received update data in the master storage device 13. The downloading phase includes a series of download-related processes such as a process for determining whether to execute downloading and a process for checking the update data. The update data sent from the OTA center 20 to the OTA master 11 may include any one of update software, compressed data of the update software, or data segments of the compressed data. The update data may include an identifier of the on-board device subject to the update and an identifier of the software prior to the update. The update data is downloaded as a distribution package. The distribution package includes the update data for one or more on-board electronic devices.

In the installing phase, update software is written to the on-board electronic device that is the update subject. In the installing phase, the OTA master 11 writes update software to a non-volatile memory of the ECU 15 that is the update subject. The installing phase includes a series of installation-related processes such as a process for determining whether to execute installation, a process for transferring the update data, a process for checking the update software, and the like. When the update data contains the update software, in the installing phase, the OTA master 11 transfers the update data to the electronic device that is the update subject. A process for generating the update software from the update data is performed when the update data contains compressed data, differential data, or data segments of the update software. The generation process may be performed by the OTA master 11 or the on-board electronic device that is the update subject. The update software may be generated by decompressing the compressed data or by combining the differential data or combining the data segments.

After the installing phase is completed, a scheduled update starting time for the software update is set. The scheduled update starting time is set through, for example, the following procedures. When the update preparation is completed, the OTA master 11 displays a page for setting the scheduled update starting time on the HMI 16. The user of the vehicle 10 sets a scheduled update starting time through the setting page displayed on the scheduled update starting time. Then, the HMI 16 sends the scheduled update starting time, set by the user, to the OTA master 11. The OTA master 11 stores the scheduled update starting time, which is received from the HMI 16, in the master storage device 13.

The scheduled update starting time may be set through the portable information terminal 30. In this case, the scheduled update starting time, which is set by the user through the portable information terminal 30, is sent, for example, via the OTA center 20 to the OTA master 11 of the vehicle 10.

### Process for Updating Software

A process for updating software will now be described. The updating process switches the on-board electronic device that is subject to update from a state in which it is operated by pre-updated software to a state in which it is operated by updated software.

At the scheduled update starting time set by the user, the OTA master 11 determines whether an execution condition for activating an update software is satisfied. The execution condition is set for each type of on-board electronic device and each update software. For example, when the on-board electronic device is a device used to execute control that is necessary for the vehicle 10 to travel, such as the engine ECU, the transmission ECU, and the brake ECU, the execution condition for a software update includes the vehicle 10 being in a state in which it is not traveling. In this manner, the OTA master 11 executes an update condition determination at the scheduled update starting time. The update condition determination determines whether the software update execution condition is satisfied at the scheduled update starting time.

When the execution condition is not satisfied, the OTA master 11 suspends execution of the updating process and issues a request for resetting the scheduled update starting time. When the software update execution condition is satisfied, the OTA master 11 starts the updating process. During the updating process, the OTA master 11 instructs the on-board electronic device that is the update subject to activate the update software. In response to the instruction, the on-board electronic device that is the update subject activates the update software. The updating process includes a series of activation-related processes such as a process for checking the execution result of the activation.

### Update Starting Failure Notification Instruction Process

The OTA master 11 executes an update starting failure notification instruction process during a period from when the scheduled update starting time is set to when it becomes the scheduled update starting time. In the update starting failure notification instruction process, the OTA master 11 determines whether the software update can be started at the scheduled update starting time. When determining that the scheduled update starting time cannot be updated, the OTA master 11 instructs issuance of an update starting failure notification notifying the user of the vehicle 10 that the update cannot be started. The update starting failure notification indicates that the software update will not start at the scheduled update starting time.

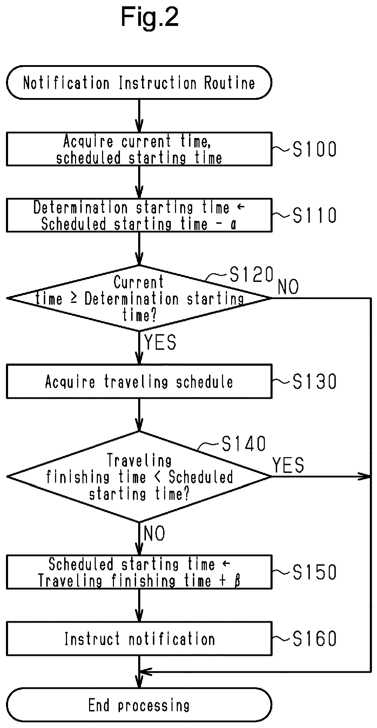

In Fig. 2, a flowchart illustrates an update starting failure notification routine executed by the OTA master 11. The update starting failure notification routine is for the update starting failure notification instruction process corresponding to the software update. The software update execution condition includes the vehicle 10 being in a parked state. The OTA master 11 executes the routine repetitively in specified control cycles during a period from when the scheduled update starting time is set to when it becomes the scheduled update starting time.

When the routine starts, in step S100, the OTA master 11 first acquires the current time and the scheduled update starting time. Then, in step S110, the OTA master 11 sets the time at a first duration α before the scheduled update starting time as a determination starting time. Further, in step S120, the OTA master 11 determines whether the current time is earlier than the determination starting time. When the current time is earlier than the determination starting time (S120: NO), the OTA master 11 ends the routine in the present control cycle. When the current time is the determination starting time or later (S120: YES), the OTA master 11 proceeds to step S130.

In step S130, the OTA master 11 acquires a traveling schedule of the vehicle 10 from the HMI 16. The traveling schedule includes information on a traveling finishing time. For example, when the HMI 16 is performing a route guide with the navigation functionality, the estimated time of arrival at the destination set by the user is used as the traveling finishing time. In another case, the present traveling destination may be estimated from the past traveling history, the current time, and the like to calculate the estimated time of arrival at the destination as the traveling finishing time.

In step S140, the OTA master 11 determines whether the traveling finishing time is earlier than the scheduled update starting time. That is, the OTA master 11 performs the scheduled update determination. The scheduled update determination includes determining at a time point before the scheduled update starting time whether the software update can be started at the scheduled update starting time. The scheduled update starting time is the scheduled starting time of the software update in the vehicle. When the scheduled update starting time is later than the traveling finishing time (S140: YES), the OTA master 11 ends the routine in the present control cycle. In this case, the software update can be started at the scheduled update starting time. When the scheduled update starting time is earlier than the traveling finishing time (S140: NO), it is expected that the vehicle 10 will be traveling at the scheduled update starting time. Thus, when the scheduled update determination is negative, the software update cannot be started at the scheduled update starting time. In this case, the OTA master 11 proceeds to step S150.

In step S150, the OTA master 11 sets the time at a second duration β after the traveling finishing time as a renewed scheduled update starting time. Subsequently, the user may manually reset the scheduled update starting time to a different time.

In step S160, the OTA master 11 instructs the HMI 16 to issue an update starting failure notification and then ends processing of the routine in the present control cycle. The instruction for issuing the update starting failure notification includes instructing the HMI 16 to issue the update starting failure notification to the vehicle user. The update starting failure notification is for notifying the user that the software update cannot be started at the scheduled update starting time set by the user. The OTA master 11 sends the reset scheduled update starting time, together with the instruction for issuing the update starting failure notification, to the HMI 16.

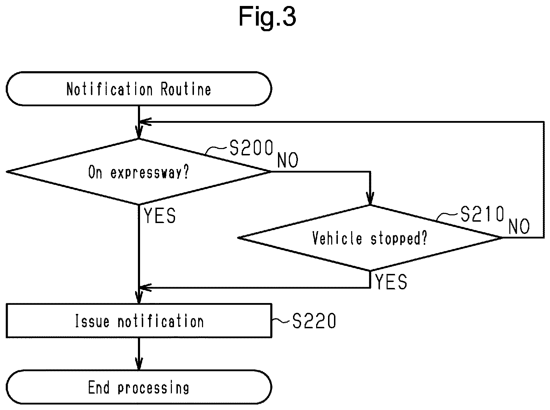

In Fig. 3, a flowchart illustrates an update starting failure notification routine executed by the HMI 16 in response to the instruction in step S150 of Fig. 2. In response to the instruction from the OTA master 11, in step S200, the HMI 16 determines whether the vehicle 10 is currently located on an expressway.

When the vehicle 10 is not located on an expressway (S200: NO), in step S210, the HMI 16 determines whether the vehicle 10 is stopped. When the vehicle 10 is not stopped (S210: NO), the HMI 16 returns to step S200. When the vehicle 10 is stopped (S210: YES), the HMI 16 proceeds to step S220.

In step S220, the HMI 16 issues the update starting failure notification as instructed by the OTA master 11. More specifically, the HMI 16 displays an image indicating that the software update will not be started at the scheduled update starting time, which was set by the user, on an update starting failure notification screen. A message indicating that the software update will start at the scheduled update starting time reset by the OTA master 11 in step S150 of Fig. 2 is also displayed on the update starting failure notification screen.

When the vehicle 10 is located on an expressway (S200: YES), the HMI 16 proceeds to step S220 regardless of whether the vehicle 10 is stopped. Thus, the HMI 16 issues the update starting failure notification when the vehicle 10 is located on an expressway even when the vehicle 10 is not stopped.

### Advantages of Embodiment

The OTA master 11 starts a software update in an on-board electronic device at a scheduled update starting time that is set by the user. When a software update execution condition is not satisfied at the set scheduled update starting time, the OTA master 11 suspends execution of the software update. For example, when the update subject is the on-board electronic device that executes control related to traveling of the vehicle 10, the execution condition for the software update includes the vehicle 10 being in a state in which it is not traveling. When the arrival of the vehicle 10 to a destination is delayed due to traffic congestion or the like, the vehicle 10 may still be traveling at the scheduled update starting time. In this case, the software update cannot be started at the scheduled update starting time. Since the software update is not executed as scheduled, user convenience may be reduced.

In this respect, the OTA master 11 determines before the scheduled update starting time whether the software update can be started at the scheduled update starting time. When determining that the software update cannot be started at the scheduled update starting time, the OTA master 11 instructs the HMI 16 to issue the update starting failure notification. The update starting failure notification indicates that the software update will not start at the scheduled update starting time. Thus, the user will know in advance that the software update will not be executed as scheduled. This reduces situations in which the user becomes confused when noticing afterward that the software update was not executed. Further, the user will be able to change the traveling schedule or the scheduled update starting time so that the software update is executed. Thus, user convenience is improved.

The advantages of the present embodiment will now be described.
(1) The user will know in advance that a software update cannot be started at the scheduled update starting time. This improves user convenience.
(2) The OTA master 11 determines from the traveling schedule of the vehicle 10 whether a software update can be started. Thus, the determination of whether the software update is executed is based on the traveling situation of the vehicle 10. This allows for accurate determination of whether the software update can be started at the scheduled update starting time.
(3) When the vehicle 10 is not located on an expressway, the HMI 16 is instructed by the OTA master 11 to issue an update starting failure notification when the vehicle 10 is stopped. The user is more likely to look at screen of the HMI 16 when the vehicle 10 is stopped than when the vehicle 10 is traveling. This ensures that the user promptly checks the contents of the update starting failure notification.
(4) When traveling on an expressway, the number of times the vehicle 10 is stopped is relatively small. Thus, if an update starting failure notification were to be issued under the condition that the vehicle is stopped, the issuance of the update starting failure notification may be delayed. In this respect, if the vehicle 10 is located on an expressway, the HMI 16 of the present embodiment issues the update starting failure notification when instructed by the OTA master 11 regardless of whether the vehicle 10 is stopped. Thus, the update starting failure notification will be issued without any delay.
(5) The determination of whether an update can be started at the scheduled update starting time is not performed prior to the time that is the first duration α before the scheduled update starting time. That is, the update starting failure notification based on the determination result is not issued. If the update starting failure notification is issued too early, the user may become confused. Further, the determination accuracy of whether an update can be started at the scheduled update starting time decreases as the length of time until the scheduled update starting time becomes longer. Thus, it is desirable that the above-described determination and the issuance of the update starting failure notification be performed at the time that is the first duration α before the scheduled update starting time.

### Corresponding Relationship

The OTA master 11 determines, in steps S130 and S140 of Fig. 2, whether the software update can be performed at the scheduled update starting time. Further, the OTA master 11 instructs, in step S160 of Fig. 2, issuance of the update starting failure notification to the user of the vehicle 10. The update starting failure notification indicates that software will not be updated at the scheduled update starting time. In the present embodiment, the OTA master 11 corresponds to a determiner, an instructor, and an information processing system. That is, the master processing circuitry 12 of the OTA master 11 corresponds to the processor or the processing circuitry of the information processing system. Further, a program executed by the OTA master 11 to implement the functionalities of the determiner and the instructor corresponds to an information processing program. The master storage device 13 of the OTA master 11 corresponds to a non-transitory computer-readable storage medium storing the information processing program.

### Other Embodiments

### Configuration of the Information Processing System

The information processing system may be configured so that the OTA center 20 executes part of the update starting failure notification instruction routine of Fig. 2. For example, the OTA master 11 may execute steps S100 to S140 of Fig. 2, and send the determination result of step S140 to the OTA center 20. Then, based on the received determination result, the OTA center 20 executes steps S150 and S160 of Fig. 2. The OTA center 20 instructs the OTA master 11 of the vehicle 10 to issue the update starting failure notification in step S160 of Fig. 2. In response to the instruction, the OTA master 11 has the HMI 16 issue the update starting failure notification. In this case, the OTA master 11 corresponds to the determiner, and the OTA center 20 corresponds to the instructor. Further, the information processing system in this case includes the OTA master 11 and the OTA center 20.

The information processing system may be configured so that the OTA center 20 executes all of the update starting failure notification instruction routine, which is illustrated in Fig. 2. In this case, the OTA center 20 shares the scheduled update starting time with the OTA master 11. Further, the OTA center 20 acquires the traveling schedule from the vehicle 10 to perform step S130. The OTA center 20 also instructs the OTA master 11 of the vehicle 10 to issue the update starting failure notification of Fig. 2. In response to the instruction, the OTA master 11 has the HMI 16 issue the update starting failure notification. In this case, the OTA center 20 corresponds to the determiner, the instructor, and the information processing system.

The portable information terminal 30 of the user may be connected to the vehicle 10 through wireless communication, and the navigation functionality of the portable information terminal 30 may be used to perform a route guide. Further, the scheduled update starting time for a software update may be set with the portable information terminal 30. The portable information terminal 30 is configured to execute the update starting failure notification instruction routine of Fig. 2. The portable information terminal 30 instructs the HMI 16 of the vehicle 10 or the terminal HMI 33 of the portable information terminal 30 to issue the update starting failure notification in step S160. In this case, the portable information terminal 30 corresponds to the determiner, the instructor, and the information processing system. Further, the program of the portable information terminal 30 used to execute the process of Fig. 2 corresponds to the information processing program.

### Process for Updating Software

In the above embodiment, the update software is installed before the scheduled update starting time. The update software may be installed at the scheduled update starting time, and the software update may be started after the installation is completed.

### Update Starting Failure Notification Instruction Routine

The determinations of steps S110 and S120 may be omitted from Fig. 2. That is, the determination of step S140 and the update starting failure notification instruction of step S160 may be performed before the determination starting time.

In step S160 of Fig. 2, the portable information terminal 30 of the user may be instructed to issue the update starting failure notification. In this case, the update starting failure notification routine is executed by the portable information terminal 30. Further, the instruction to issue the update starting failure notification is sent from the OTA master 11 via the OTA center 20 to the portable information terminal 30 of the user.

### Update Starting Failure Notification Routine

In the above embodiment, in response to the instruction from the OTA master 11, the HMI 16 determines when to issue the update starting failure notification. The OTA master 11 may determine when to issue the update starting failure notification and instruct the HMI 16 accordingly. For example, the OTA master 11 performs the determination of steps S200 and S210. The OTA master 11 instructs the HMI 16 to issue the update starting failure notification when determining that the update starting failure notification can be issued. In this case, the HMI 16 issues the update starting failure notification in response to the instruction from the OTA master 11. If the vehicle 10 is not located on an expressway, the OTA master 11 sends an instruction to the HMI 16 in step S160 of Fig. 2 to issue the update starting failure notification when the vehicle 10 is stopped.

### Resetting of the Scheduled Update Starting Time

In the above embodiment, when determining that a software update cannot be started at the scheduled update starting time, the OTA master 11 resets the scheduled update starting time to a time at the second duration β after the traveling finishing time in step S150 of Fig. 2. The scheduled update starting time may be reset through a different method. For example, the scheduled update starting time may be reset delayed by one day.

The user may be requested to approve the reset scheduled update starting time.

The resetting of the scheduled update starting time does not have to be performed automatically and may be performed manually by the user.

### Software Update Execution Condition

In the example of the above embodiment, the software update execution condition includes the vehicle 10 being in a state in which it is not traveling. The software update may not be started at the scheduled update starting time if another execution condition is not satisfied. For example, Wi-Fi connection may be necessary to check the activation result. In such a case, the software update execution condition includes a state in which the vehicle 10 is located at a Wi-Fi access point at the scheduled update starting time. The on-board electronic device that is subject to the software update subject may be a device that provides a service performed when the vehicle 10 is traveling in addition to a service provided when the vehicle 10 is parked, such as parking monitoring. In such a case, the software update cannot be executed even if the vehicle 10 finishes traveling unless the user stops the service provided when the vehicle 10 is parked. In this case, the software update execution condition includes a state in which the service provided when the vehicle is parked is stopped. Further, the software update execution condition may include a state in which the vehicle 10 is not traveling. In any case, the determination of step S140 in Fig. 2 is performed by determining whether the software update execution condition is satisfied at the scheduled update starting time.

Any of the determiner, the instructor, and the information processing system may be configured by circuitry including one or more processor executing processes in accordance with a computer program (software). A processor or processing circuitry may include one or more dedicated hardware circuits, such as application-specific integrated circuits (ASICs), that execute at least some of the processes or circuitry including a combination of such hardware circuits. The processor includes a CPU and memories such as a RAM and a ROM. The memory stores program codes and instructions configured to have the CPU execute a process. The memory, which is a non-transitory computer-readable storage medium, includes any medium such as a tangible or non-transitory storage medium that is computer-readable and accessible by a versatile or dedicated computer.

### Clauses

Technical concepts that can be recognized from the above embodiments and modified examples will now be described.

### [Clause 1]

An information processing system, including:
a determiner configured to determine, before a scheduled starting time for updating software in a vehicle, whether the update can be started at the scheduled starting time; and
an instructor configured to instruct issuance of a notification notifying a user of the vehicle that the update will not start at the scheduled starting time when the determiner determines that the update cannot be started at the scheduled starting time.

### [Clause 2]

The information processing system according to clause 1, where the determiner determines whether the update can be started based on a traveling schedule of the vehicle.

### [Clause 3]

The information processing system according to clause 1 or 2, where the instructor instructs the notification to be issued when the vehicle is stopped.

### [Clause 4]

The information processing system according to clause 3, where, when the vehicle is located on an expressway, the instructor instructs the notification to be issued even when the vehicle is not stopped.

### [Clause 5]

The information processing system according to any one of clauses 1 to 4, where
the determiner is configured to determine whether an execution condition for updating the software will be satisfied at the scheduled starting time; and
the determiner is configured to determine that the update cannot be started when determining that the execution condition will not be satisfied.

### [Clause 6]

An information processing method, including:
determining, before a scheduled starting time for updating software in a vehicle, whether the update can be started at the scheduled starting time; and
instructing issuance of a notification notifying a user of the vehicle that the update will not start at the scheduled starting time when determining that the update cannot be started at the scheduled starting time.

### [Clause 7]

The information processing method according to clause 6, where the determining is performed based on a traveling schedule of the vehicle.

### [Clause 8]

The information processing method according to clause 6 or 7, where the notification is issued when the vehicle is stopped.

### [Clause 9]

The information processing method according to clause 8, where, when the vehicle is located on an expressway, the notification is issued even when the vehicle is not stopped.

### [Clause 10]

The information processing method according to any one of clauses 6 to 9, further including:
determining whether an execution condition for updating the software will be satisfied at the scheduled starting time; and
determining that the update cannot be started when determined that the execution condition will not be satisfied.

### [Clause 11]

An information processing program for having a processor perform information processing related to update of software in a vehicle, the information processing program including:
acquiring a scheduled starting time for updating the software;
determining before the scheduled starting time whether the update can be started at the scheduled starting time; and
instructing issuance of a notification notifying a user of the vehicle that the update will not start at the scheduled starting time when determined that the update cannot be started at the scheduled starting time.

### [Clause 12]

The information processing program according to clause 11, where the information processing further includes:
acquiring a traveling schedule of the vehicle; and
determining whether the update can be started at the scheduled starting time based on the traveling schedule.

### [Clause 13]

The information processing program according to clause 11 or 12, where issuance of the notification is instructed when the vehicle is stopped.

### [Clause 14]

The information processing program according to clause 13, where, when the vehicle is located on an expressway, issuance of the notification is instructed even when the vehicle is not stopped.

### [Clause 15]

The information processing program according to any one of clauses 11 to 14, where the information processing further includes:
determining whether an execution condition for updating the software will be satisfied at the scheduled starting time; and
determining that the update cannot be started when determined that the execution condition will not be satisfied.

### [Clause 16]

A non-transitory computer-readable storage medium storing the information processing program according to any one of clauses 11 to 14.

## Claims

1. An information processing system, comprising:
processing circuitry, wherein
the processing circuitry is configured to perform a scheduled update determination, the scheduled update determination includes determining before a scheduled update starting time whether a software update can be started at the scheduled update starting time, and the scheduled update starting time is a scheduled starting time of the software update in a vehicle; and
the processing circuitry is configured to instruct issuance of an update starting failure notification to a user of the vehicle when the scheduled update determination is negative, and the update starting failure notification indicates that the software update will not be started at the scheduled update starting time.

2. The information processing system according to claim 1, wherein the scheduled update determination is performed based on a traveling schedule of the vehicle.

3. The information processing system according to claim 1 or 2, wherein the issuance of the update starting failure notification is instructed so that the update starting failure notification is issued when the vehicle is stopped.

4. The information processing system according to claim 3, wherein, when the vehicle is located on an expressway, the issuance of the update starting failure notification is instructed so that the update starting failure notification is issued even when the vehicle is not stopped.

5. The information processing system according to any one of claims 1 to 4, wherein
the scheduled update determination includes an update condition determination, and the update condition determination determines whether an execution condition for the software update will be satisfied at the scheduled update starting time; and
when the update condition determination is negative, the scheduled update determination is negative.

6. An information processing method, comprising:
performing a scheduled update determination with processing circuitry, wherein the scheduled update determination includes determining before a scheduled update starting time whether a software update can be started at the scheduled update starting time, and the scheduled update starting time is a scheduled starting time of the software update in a vehicle; and
instructing, with the processing circuitry, issuance of an update starting failure notification to a user of the vehicle when the scheduled update determination is negative, wherein the update starting failure notification indicates that the software update will not be started at the scheduled update starting time.

7. The information processing method according to claim 6, wherein the scheduled update determination is performed based on a traveling schedule of the vehicle.

8. The information processing method according to claim 6 or 7, wherein the update starting failure notification is issued when the vehicle is stopped.

9. The information processing method according to claim 8, wherein, when the vehicle is located on an expressway, the update starting failure notification is issued even when the vehicle is not stopped.

10. The information processing method according to any one of claims 6 to 9, further comprising:
performing an update condition determination, wherein
the update condition determination includes determining whether an execution condition for the software update will be satisfied at the scheduled update starting time, and
when the update condition determination is negative, the scheduled update determination is negative.

11. A non-transitory computer-readable storage medium, comprising:
a program stored to have a processor perform information processing, the information processing including:
acquiring a scheduled update starting time that is a scheduled starting time for a software update in a vehicle;
performing a scheduled update determination, wherein the scheduled update determination includes determining before the scheduled update starting time whether the software update can be started at the scheduled update starting time; and
instructing issuance of an update starting failure notification to a user of the vehicle when the scheduled update determination is negative, wherein the update starting failure notification indicates that the software update will not be started at the scheduled update starting time.

12. The non-transitory computer-readable storage medium according to claim 11, the information processing further including:
acquiring a traveling schedule of the vehicle,
wherein the scheduled update determination is performed based on the traveling schedule.

13. The non-transitory computer-readable storage medium according to claim 11 or 12, wherein the issuance of the update starting failure notification is instructed so that the update starting failure notification is issued when the vehicle is stopped.

14. The non-transitory computer-readable storage medium according to claim 13, wherein, when the vehicle is located on an expressway, the issuance of the update starting failure notification is instructed so that the update starting failure notification is issued even when the vehicle is stopped.

15. The non-transitory computer-readable storage medium according to any one of claims 11 to 14, the information processing further including:
performing an update condition determination, wherein
the update condition determination includes determining whether an execution condition for the software update will be satisfied at the scheduled update starting time, and
when the update condition determination is negative, the scheduled update determination is negative.
